**Europäisches Patentamt**

**European Patent Office**

**Office européen des brevets**

(19)

(11) Veröffentlichungsnummer : **0 451 483 B1**

# (12) EUROPÄISCHE PATENTSCHRIFT

(45) Veröffentlichungstag der Patentschrift :
**19.01.94 Patentblatt 94/03**

(51) Int. Cl.⁵ : **H01S 3/03,** H01S 3/038

(21) Anmeldenummer : **91102975.9**

(22) Anmeldetag : **27.02.91**

(54) **Elektrisch angeregter Bandleiterlaser.**

(30) Priorität : **29.03.90 DE 4010147**

(43) Veröffentlichungstag der Anmeldung :
**16.10.91 Patentblatt 91/42**

(45) Bekanntmachung des Hinweises auf die
Patenterteilung :
**19.01.94 Patentblatt 94/03**

(84) Benannte Vertragsstaaten :
**DE FR GB IT**

(56) Entgegenhaltungen :
**EP-A- 0 305 893**

(73) Patentinhaber : **SIEMENS
AKTIENGESELLSCHAFT
Wittelsbacherplatz 2
D-80333 München (DE)**

(72) Erfinder : **Krüger, Hans, Dipl.-Phys.
Peralohstrasse 13
W-8000 München 83 (DE)**
Erfinder : **Weber, Hubert, Dipl.-Phys.
Bahnhofstrasse 26
W-8900 Augsburg (DE)**

## Beschreibung

Die vorliegende Erfindung betrifft einen elektrisch angeregten Bandleiterlaser nach dem Oberbegriff des Patentanspruchs 1. Ein derartiger Laser ist aus der DE-OS 37 29 053 bekannt. Dort ist ein Wellenleiter aus Isolierstoff an seiner Außenseite mit Elektroden beschichtet. Im Entladungsspalt können zusätzliche Metallschichten zur Verbesserung der Wellenleitfähigkeit angeordnet sein. Diese Schichten können in Flächen aufgeteilt sein, zwischen denen metallfreie, elektrisch isolierende Streifen liegen.

Die Aufgabe, die der vorliegenden Erfindung zugrundeliegt, besteht in einer Erhöhung der spezifischen Leistung eines derartigen Lasers. Als spezifische Leistung wird die Leistung je Entladungsvolumeneinheit bezeichnet. Diese Aufgabe wird bei einem Laser nach dem Oberbegriff durch die kennzeichnenden Merkmale des Patentanspruchs 1 gelöst.

Ein Isolierstoffteil, welches zwischen Elektrode und Spiegel liegt, ermöglicht sowohl bei Metallspiegeln als auch bei elektrisch nicht leitenden Spiegeln eine Erhöhung der Laserleistung. Dies beruht darauf, daß im Bereich des Isolierstoffteiles kein Plasma entsteht. Dadurch bedingt werden bei Metallspiegeln Überschläge auf den Spiegel vermieden und bei Isolierstoffspiegeln eine Schädigung durch Einwirkung des Plasmas ausgeschaltet. Insbesondere wird eine Herabsetzung des Relexionsvermögens des Spiegels vermieden.

Durch die Erfindung kann man auf isolierende und plasmastabile, dafür aber relativ teure Spiegelmaterialien wie beispielsweise Gallium-Arsenid, Silizium, Germanium verzichten. Dafür lassen sich gut kühlbare und hochtemperaturfeste Spiegelmaterialien einsetzen, beispielsweise Metalle, insbesondere Kupfer. Dies ist gerade bei hohen Laserleistungen erforderlich, da dabei bereits die sehr geringen Verluste am Spiegel zu einer deutlichen Erwärmung und damit zu einer Verformung oder Zerstörung desselben führen.

Das Isolierstoffteil wird vorteilhaft in seiner Wellenleitfähigkeit an diejenige des Elektrodenmaterials angepaßt. In einer verbesserten Ausführungsform werden die Materialien der Elektrode und des Isolierstoffteiles im Temperaturausdehnungskoeffizienten aneinander angepaßt und das Isolierstoffteil auf der dem Entladungskanal zugewandten Seite mit einer Schicht mit vorteilhaften Wellenleitereigenschaften versehen.

Als besonders geeignet haben sich die folgenden Werkstoffpaarungen Metallelektrode/Isolierstoffteil herausgestellt:

| Metall | Al | Cu | Stahl | Vacon |
|--------|--------------|--------------|-----------|-------|
| Keramik | $Al_2O_3$ Glas | $Al_2O_3$ Glas | Forsterit | Glas |

Diese Werkstoffe passen im Wellenleiterverhalten gut zueinander, es ergeben sich dabei nahezu verlustlose Wellenleiter. Die Stoffpaarungen Stahl/Forsterit und Vacon/Glas sind außerdem im Temperaturkoeffizienten weitgehend aneinander angepaßt. Die Elektrode und das Isolierstoffteil sind dabei zunächst miteinander mechanisch so verbunden, daß sich eine glatte Wellenleiterfläche ergibt. Vorteilhaft ist weiterhin, wenn das Isolierstoffteil aus einem Material mit relativ kleiner Dielektrizitätskonstante besteht. Dadurch ergibt sich eine günstige Feldverteilung am Ende des vom Plasma erfüllten Teiles des Entladungsraums bei einem in Strahlrichtung des Laserstrahles relativ kurzen Isolierstoffteil.

Eine einfache, ausreichend kühlbare und plasmastabile Ausführungsform ist gegeben, indem eine Elektrode den gesamten Abstand zwischen den Resonatorspiegeln ausfüllt, indem diese Elektrode elektrisch auf Masse gelegt und mit beiden Spiegeln galvanisch und thermisch leitend verbunden ist, indem nur diese Elektrode Kühlmittelkanäle enthält und indem die gegenüberliegende Elektrode beidseitig über Isolierstoffteile mit den Resonatorspiegeln verbunden ist. Hier wird das Plasma vom Spiegel ferngehalten. Die geerdete Elektrode ermöglicht außerdem einen stabilen Aufbau und vermeidet alle Probleme mit einer spannungsmäßigen Abtrennung der Kühlmittelleitung von der Elektrode.

Die Erfindung wird nun anhand von drei Figuren näher erläutert. Sie ist nicht auf die in den Figuren gezeigte Beispiele beschränkt.

FIG 1      zeigt einen Schnitt eines ersten,

FIG 2      zeigt eine Draufsicht und

FIG 3      einen Schnitt durch einen zweiten erfindungsgemäßen Bandleiter- oder Slablaser schematisch.

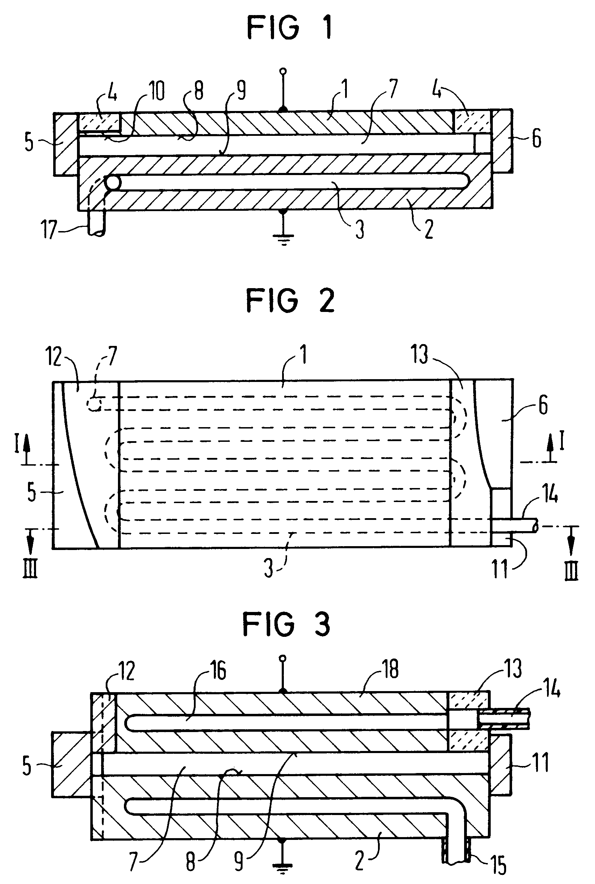

In einem erfindungsgemäßen Bandleiterlaser liegen sich Elektroden 1 und 2 bezogen auf einen Entladungsspalt 7 gegenüber. An die Elektrode 1 grenzt auf beiden Seiten ein Isolierstoffteil 4 und an dieses je ein Spiegel 5 bzw. 6 an. Die gegenüberliegende Elektrode 2 grenzt unmittelbar an die Spiegel 5 und 6 an. Die Elektrode 1 und die Isolierstoffteile 4 bilden gemeinsam eine Wellenleiterfläche 8. Hierzu sind die Isolierstoffteile 4 mit einer Schicht 10 aus gut wellenleitendem Material beschichtet, wobei die Wellenleitereigenschaften der Schicht 10 an die der Elektrode 1 angepaßt sind. Die Elektrode 1 und die Schicht 10 sind nach dem Zusammenbau der Elektrode 1 mit den Isolierstoffteilen 4 gemeinsam geglättet, beispielsweise geläppt und/oder poliert. Dadurch ergibt sich eine Wellenleiterfläche hoher Güte und ohne Sprünge in den Wellenleitereigenschaften. Dadurch werden die Verluste kleingehalten und eine lokale Überhitzung und Zerstörung der Wellenleiterfläche am Übergang von einem Material zum anderen vermieden. Die Leistungsfähigkeit der beschriebenen Anordnung ist besonders hoch, da einerseits die Spiegel unmittelbar am Wellenleiter anliegen, so daß Streuungen und Verluste durch die Divergenz des Laserlichtes ausgeschaltet sind und da andererseits weder Überschläge von der Elektrode 1 auf die Spiegel 5, 6 noch eine Schädigung der Spiegel durch das Plasma möglich ist. Wird ein Spiegel 5, 6 aus einem plasmaunempfindlichen Isolierstoff hergestellt, beispielsweise aus GaAs oder Si oder Ge, dann kann das entsprechende Isolierstoffteil 4 entfallen und die Elektrode 1 an den Spiegel heranreichen. Diese Stoffe sind teuer. Bei höheren Belastungen empfiehlt es sich generell, einen Aufbau mit Isolierstoffteilen 4, 12, 13 einzusetzen, wie auch in den FIG 2 und 3 gezeigt. In diesem Beispiel ist eine geerdete und gekühlte Elektrode 2 eingesetzt. Die zweite Elektrode 18 ist hier beidseitig mit Isolierstoffteilen 12, 13 gegen die Spiegel 5, 6 abgesetzt. Die Elektrode 18 enthält zumindest einen Kühlkanal 16, an den ein Anschlußrohr 14 anschließt. Auch Wasser ist als Kühlmittel einsetzbar.

Die Elektrode 2 ist auf Masse gelegt und enthält Kühlkanäle 3, die an zumindest zwei Stellen in Kühlmittelleitungen 15, 17 einmünden. Die von der Elektrode 2 gebildete Wellenleiterfläche 9 geht von Spiegel zu Spiegel durch. So ergibt sich eine gute Kühlung über die gesamte Länge des Entladungsspaltes, die insbesondere bei geringen Spaltdicken des Entladungsspaltes 7 auch für höhere Laserleistungen ausreicht. Die Spiegel 5, 6 sind mit der Elektrode 2 galvanisch leitend verbunden.

Die Isolierstoffteile 4 bzw. 12, 13 sind so dimensioniert, daß an keiner Stelle ein Überschlag zum Spiegel 5, 6 möglich ist und daß das Plasma im Bereich der Isolierstoffteile 4,12, 13 aufgrund der Feldverteilung vor dem Erreichen des Spiegels 5, 6 endet oder zumindest auf einen unkritisch geringen Wert abfällt. Das Plasma wird im Bereich der Isolierstoffteile 4, 12, 13 zur Elektrode hin entladen, Lichtbögen aus dem Plasma werden auf die Elektrode 2 gezogen, die Spiegel 5, 6 bleiben unversehrt.

Der Spiegel 5 ist konkav, der Spiegel 6 konvex gewölbt. Die Spiegel bilden einen instabilen Resonator. Ein Fenster 11 stellt den Strahlaustritt dar.

## Patentansprüche

1. Elektrisch angeregter Bandleiterlaser, welcher zwei Wellenleiterflächen (8,9), zwei Resonatorspiegel (5,6) und zumindest zwei Entladungselektroden (1,2) enthält, wobei die Elektroden einander bezogen auf die Strahlrichtung gegenüber liegen und wobei Wellenleiterflächen bis an die Resonatorspiegel heranreichen und aus elektrisch nichtleitenden und metallischen Teilflächen zusammengesetzt sind, **dadurch gekennzeichnet**, daß eine der Wellenleiterflächen aus einer Elektrode (1) und zumindest einem daran in Strahlrichtung angrenzenden Isolierstoffteil (4) zusammengesetzt ist, daß die zweite Elektrode (2) das Isolierstoffteil in Strahlrichtung überlappt und daß das Isolierstoffteil aus einem Werkstoff mit vorteilhaftem Wellenleitereigenschaften für die Laserstrahlung besteht.

2. Bandleiterlaser nach Anspruch 1, **dadurch gekennzeichnet**, daß an das Isolierstoffteil ein Spiegel aus Metall, insbesondere Kupfer, angrenzt.

3. Bandleiterlaser nach Anspruch 1, **dadurch gekennzeichnet**, daß an das Isolierstoffteil ein Spiegel aus elektrisch isolierendem Material angrenzt.

4. Bandleiterlaser nach Anspruch 1, **dadurch gekennzeichnet**, daß das Material der Elektrode und das des Isolierstoffteiles im Temperaturausdehnungskoeffizienten aufeinander angepaßt sind und daß das Isolierstoffteil auf der dem Entladungskanal zugewandten Seite mit einer Schicht mit vorteilhaften Wellenleitereigenschaften versehen ist.

5. Bandleiterlaser nach Anspruch 1, **dadurch gekennzeichnet**, daß die Werkstoffpaarung für die Elektrode und für das Isolierstoffteil aus der folgenden Tabelle ausgewählt ist:

| Metall | Al | Cu | Stahl | Vacon |
|---|---|---|---|---|
| Keramik | $Al_2O_3$ Glas | $Al_2O_3$ Glas | Forsterit | Glas |

6. Bandleiterlaser nach Anspruch 1, **dadurch gekennzeichnet,** daß das Isolierstoffteil aus einem Material mit einer relativ kleinen Dielektrizitätskonstante besteht.

7. Bandleiterlaser nach einem der Ansprüche 1 bis 6, **dadurch gekennzeichnet,** daß eine Elektrode den gesamten Abstand zwischen den Resonatorspiegeln ausfüllt, daß diese Elektrode (2) elektrisch auf Masse gelegt und mit beiden Spiegeln galvanisch leitend verbunden ist, daß nur diese Elektrode Kühlmittelkanäle (3) enthält und daß die gegenüberliegende Elektrode beidseitig über Isolierstoffteile mit den Resonatorspiegeln verbunden ist.

## Claims

1. Electrically excited microstrip laser which contains two waveguide surfaces (8, 9), two resonator mirrors (5, 6) and at least two discharge electrodes (1, 2), the electrodes being opposite one another in relation to the beam direction and waveguide surfaces reaching up to the resonator mirrors and being assembled from electrically non-conductive and metallic part-surfaces, characterized in that one of the waveguide surfaces is assembled from an electrode (1) and at least one insulating-material part (4) adjoining thereto in the direction of the beam, in that the second electrode (2) overlaps the insulating-material part in the beam direction, and in that the insulating-material part consists of a material having advantageous waveguide characteristics for the laser radiation.

2. Microstrip laser according to Claim 1, characterized in that the insulating-material part is adjoined by a mirror made of metal, preferably copper.

3. Microstrip laser according to Claim 1, characterized in that the insulating-material part is adjoined by a mirror made of electrically insulating material.

4. Microstrip laser according to Claim 1, characterized in that the material of the electrode and that of the insulating-material part are matched to one another in the coefficient of thermal expansion, and in that the insulating-material part is provided on the side facing the discharge channel with a layer having advantageous waveguide characteristics.

5. Microstrip laser according to Claim 1, characterized in that the pairing of materials for the electrode and for the insulating-material part is selected from the following table:

| Metal | Al | Cu | Steel | Vacon |
|---|---|---|---|---|
| Ceramics | $Al_2O_3$ Glass | $Al_2O_3$ Glass | Forsterite | Glass |

6. Microstrip laser according to Claim 1, characterized in that the insulating-material part consists of a material having a relatively small dielectric constant.

7. Microstrip laser according to one of Claims 1 to 6, characterized in that one electrode fills the entire distance between the resonator mirrors, in that this electrode (2) is electrically connected to earth and galvanically conductively connected to both mirrors, in that only this electrode contains coolant ducts (3), and in that the opposite electrode is connected to the resonator mirrors via insulating-material parts on both sides.

**Revendications**

1. Laser à guide d'ondes en forme de bande et à excitation électrique, qui comporte deux surfaces (8,9) formant guide d'ondes, deux miroirs (5,6) de résonateur et au moins deux électrodes de décharge (1,2), et dans lequel les électrodes sont situées en vis-à-vis l'une de l'autre par dans la direction du rayonnement, et les surfaces formant guide d'ondes s'étendent jusqu'à proximité des miroirs du résonateur et sont composées de surfaces partielles métalliques non conductrices de l'électricité, caractérisé par le fait que l'une des surfaces formant guide d'ondes est composé d'une électrode (1) et d'au moins une partie en matériau isolant (4) qui la jouxte dans la direction du rayonnement, que la seconde électrode (2) recouvre la partie en matériau isolant dans la direction du rayonnement et que la partie en matériau isolant est en un matériau à bonne propriété de guide d'ondes pour le rayonnement laser.

2. Laser à guide d'ondes en forme de bande suivant la revendication 1, caractérisé par le fait qu'un miroir en métal, notamment en cuivre, est contigu à la partie en matériau isolant.

3. Laser à guide d'ondes en forme de bande suivant la revendication 1, caractérisé par le fait qu'un miroir en matériau électriquement isolant est contigu à la partie en matériau isolant.

4. Laser à guide d'ondes en forme de bande suivant la revendication 1, caractérisé par le fait que le matériau de l'électrode et le celui de la partie en matériau isolant ont des coefficients de dilatation thermique adaptés l'un à l'autre et que la partie en matériau isolant comporte, sur sa face tournée vers le canal de décharge, une couche ayant de bonnes propriétés de guide d'ondes.

5. Laser à guide d'ondes en forme de bande suivant la revendication 1, caractérisé par le fait que l'appariement des matériaux pour l'électrode et pour la partie en matériau isolant est choisi dans le tableau suivant :

| Métal | Al | Cu | acier | vacon |
|---|---|---|---|---|
| Céramique | $Al_2O_3$ verre | $Al_2O_3$ verre | forstérite | verre |

6. Laser à guide d'ondes en forme de bande suivant la revendication 1, caractérisé par le fait que la partie en matériau isolant est en un matériau de constante diélectrique relativement petite.

7. Laser à guide d'ondes en forme de bande suivant l'une des revendications 1 à 6, caractérisé par le fait qu'une électrode emplit tout l'intervalle compris entre les miroirs du résonateur, que cette électrode (2) est reliée électriquement à la masse et est reliée d'une manière galvaniquement conductrice aux deux miroirs, que seule cette électrode comporte des canaux (3) pour un fluide de refroidissement et que l'électrode opposée est reliée, des deux côtés, par l'intermédiaire de parties en matériau isolant, aux miroirs du résonateur.

## FIG 1

## FIG 2

## FIG 3